# EUROPÄISCHE PATENTSCHRIFT

(11) **EP 0 590 430 B1**
(45) Veröffentlichungstag und Bekanntmachung des Hinweises auf die Patenterteilung: **28.01.1998**
(21) Anmeldenummer: 93114943.9
(22) Anmeldetag: 16.09.1993
(51) Int. Cl.: G05B 13/02, D21G 9/00

(54) **Vorrichtung zur automatischen Führung einer verfahrenstechnischen Anlage durch Fuzzy-Steuerung des Prozessführungsraumes, mit bevorzugten Verwendungen**
Device for the automatic control of a processing plant by means of fuzzy logic control having preferred applications
Dispositif pour la commande automatique d'une installation de traitement basée sur la logique floue et ayant des applications préférées

(30) Priorität: 01.10.1992 DE 4233093
(43) Veröffentlichungstag der Anmeldung: 06.04.1994
(73) Patentinhaber: SIEMENS AKTIENGESELLSCHAFT, 80333 München (DE)
(72) Erfinder: Furumoto, Herbert, Dr., D-91052 Erlangen (DE); Fricke, Christian, Dr., D-30989 Gehrden (DE)

(56) Entgegenhaltungen:
- GB-A- 2 211 324
- PATENT ABSTRACTS OF JAPAN vol. 16, no. 144 (C-927)(5187) 10. April 1992 & JP-A-04 002 896 (YOKOGAWA ELECTRIC CORPORATION) 7. Januar 1992
- PATENT ABSTRACTS OF JAPAN vol. 16, no. 387 (C-975)18. August 1992 & JP-A-04 126 887 (YOKOGAWA ELECTRIC CORPORATION) 23. April 1992
- PATENT ABSTRACTS OF JAPAN vol. 14, no. 406 (C-754)(4349) 4. September 1990 & JP-A-02 154 094 (YOKOGAWA ELECTRIC CORPORATION) 13. Juni 1990
- TAPPI JOURNAL Bd. 69, Nr. 5 , Mai 1986 , ATLANTA US Seiten 94 - 97 S.RODING ET AL 'FEX,THE NEW STFI EXPERIMENTAL PAPER MACHINE'

## Beschreibung

Die Erfindung betrifft ein Verfahren zur automatischen Führung einer Produktionsanlage mit Chargenbetrieb, der zur Erzeugung eines Fertigproduktes Eintragsstoffe zugeführt werden. Die Erfindung betrifft ferner die zugehörige Vorrichtung zur Durchführung des Verfahrens. Die Produktionsanlage ist dabei insbesondere eine Zellstoffkocherei zur Umwandlung von Holzstoff in Zellstoff.

Bei technischen Prozessen zur Umwandlung, Be- und/oder Verarbeitung von Eintragsstoffen müssen Grenzen für die zulässigen Werte der technologischen Parameter des Prozesses vorgegeben werden, insbesondere für Regel-, Steuer-, Zustands- und Stellgrößen. Diese Grenzen bilden einen sogenannten "Prozeßführungsraum", in dem sich die Istwerte der Prozeßparameter aufhalten sollten bzw. müssen. Zur automatischen Führung des verfahrenstechnischen Prozesses sind Automatisierungsmittel vorhanden, insbesondere Steuer-und/oder Regelungseinrichtungen, welche innerhalb der vorgegebenen Grenzen die Regelgrößen des Prozesses vorgegebenen Sollwerten möglichst optimal nachführen. Die Regeleinrichtungen sorgen somit dafür, daß die Istwerte der Prozeßparameter den Prozeßführungsraum möglichst nicht bzw. nur kurzzeitig verlassen, d.h. dessen Grenzen nicht über- bzw. unterschreiten.

Insbesondere beim verfahrenstechnischen Prozeß der Umwandlung von Holzstoff in Zellstoff, d.h. bei der sogenannten "Zellstoffkochung", das Hochheizen und Kochen der Suspension aus Kochflüssigkeit und Holzstoff durch die zulässigen maximalen und minimalen Kochtemperaturen bestimmt. Mit Mitteln zur Führung des Prozesses, welche bevorzugt Abtastregelungen, Schrittsteuerungen, Fuzzy-Steuerungen und dergleichen enthalten können, wird versucht, den Istwert der Kochtemperatur möglichst innerhalb dieser Grenzen zu halten und derart zu führen, daß bei möglichst kurzer Kochzeit und möglichst minimalem Energieeinsatz der Zellstoff am Ende der Kochung eine gewünschte, hohe Qualität aufweist.

Die Werte der Grenzen von Prozeßparametern werden erfahrungsgemäß sehr lange annähernd konstant gehalten. Nur in Ausnahmefällen werden diese Grenzwerte vom Bedienpersonal der prozeßtechnischen Anlage durch manuelle Eingabe in die zur Prozeßführung dienenden Mittel, insbesondere einer speicherprogrammierbaren Steuerung, einem Automatisierungssystem bzw. einem Prozeßrechner, geringfügig angepaßt. Diese Stabilität von einmal eingegebenen Grenzen für Prozeßparameter hat ihre Ursache darin, daß sich die einzelnen Werte aufgrund von manchmal jahrelanger Erfahrung beim Betrieb des jeweiligen technologischen Prozesses herausgebildet haben. So werden die Grenzen vom jeweiligen Bedienpersonal in der Regel nur im äußersten Notfall angepaßt, da deren Werte häufig von unterschiedlichen und teils widersprechenden Anforderungen bzw. Nebenbedingungen abhängig sind. Die Auswirkung der Veränderung einer Prozeßparametergrenze auf die Funktionsfähigkeit der gesamten Anlage wird somit selbst von einem erfahrenen Schichtführer nicht immer vollständig überblickt. So kann der Fall auftreten, daß die Veränderung einer Grenze zur Optimierung eines Prozeßparameters beim Betrieb der Prozeßanlage in unerwarteter Weise die Verschlechterung von anderen Prozeßparametern nach sich zieht. Zudem sind insbesondere die Maximalwerte von Prozeßparametergrenzen sehr wichtig für die Betriebssicherheit der prozeßtechnischen Anlage.

Die der Starrheit von einmal aufgefundenen und in automatische Mittel zur Führung des Prozesses eingegebenen Grenzwerten von Prozeßparametern hat aber zur Folge, daß der technologische Prozeß nur mit eingeschränktem Wirkungsgrad im Inneren des nahezu unveränderlich vorgegebenen Prozeßführungsraumes betrieben werden kann. So ist es nahezu nicht möglich, die Grenzen mancher Prozeßparameter in einer für die Führung des Gesamtprozesses verträglichen Weise, insbesondere an aktuell veränderte Produktionszielwerte optimal anzupassen. Es kann z.B. der Fall auftreten, daß vorübergehend eine Erhöhung der Produktionsmenge bzw. Ausbeute eines Fertigproduktes unter Verzicht auf sehr hohe Werte der Produktqualität notwendig ist. Umgekehrt kann auch der Fall auftreten, daß vorübergehend das jeweilige Fertigprodukt in einer sehr hohen Qualtität produziert werden muß, und dabei die Anforderungen an Produktionsmenge bzw. Ausbeute zurückgenommen werden. Derartige vorübergehende Schwankungen bei den aktuellen Produktionszielwerten können bislang nur schwer berücksichtigt werden, da der durch die festen Grenzen eines jeden Prozeßparameters vorgegebene Prozeßführungsraum für die Produktionsanlage nicht aktuell systematisch anpaßbar ist.

Speziell aus der GB-A-22 11 324 ist eine Fuzzy-Inferenz-Einrichtung bekannt, die im Zusammenhang mit auf der Fuzzy-Technologie beruhenden Regeleinrichtungen insbesondere die Eingangsvariablen für einen Satz entsprechender Zugehörigkeitsfunktionen bestimmt. Dabei werden die Zugehörigkeitsfunktionen im Hinblick auf die vorhandenen Fuzzy-Regeln überprüft und im einzelnen über eine Rückkopplung die Zugehörigkeitsfunktionen mit gewichteten Funktionen einer vorher synthetisch ermittelten Zugehörigkeitsfunktion kombiniert. Eine solche Einrichtung soll in allgemeinster Form zum Regeln von nicht weiter spezifizierten Industrieanlagen anwendbar sein.

Der Erfindung liegt daher die Aufgabe zugrunde, die automatische Führung einer Produktionsanlage mit Chargenbetrieb so zu verbessern, daß sie schnell und genau an aktuelle Schwankungen von Produktionszielwerten angepaßt werden kann. Ein derartiges Verfahren und die diesbezügliche Vorrichtung sollen insbesondere für die Umwandlung von Holz in Zellstoff im Rahmen einer Zellstoffkocherei einsetzbar sein.

Die Aufgabe wird gelöst mit den im Patentanspruch 1 angegebenen Verfahren. Vorteilhafte Weiterbildungen sind in den abhängigen Ansprüchen und die zugehörige Vorrichtung in den Patentansprüchen 8 und 9 angegeben.

Die Erfindung wird unter Zuhilfenahme der nachfolgend kurz angeführten Figuren näher erläutert. Dabei zeigt
- FIG 1: ein Blockschaltbild einer Vorrichtung zur Führung einer Produktionsanlage mit Chargenbetrieb und
- FIG 2: der bei Verwendung der Vorrichtung gemäß FIG 1 für eine Produktionsanlage zur Umwandlung von Holzstoff in Zellstoff auftretende Verlauf der Prozeßtemperatur T(t).

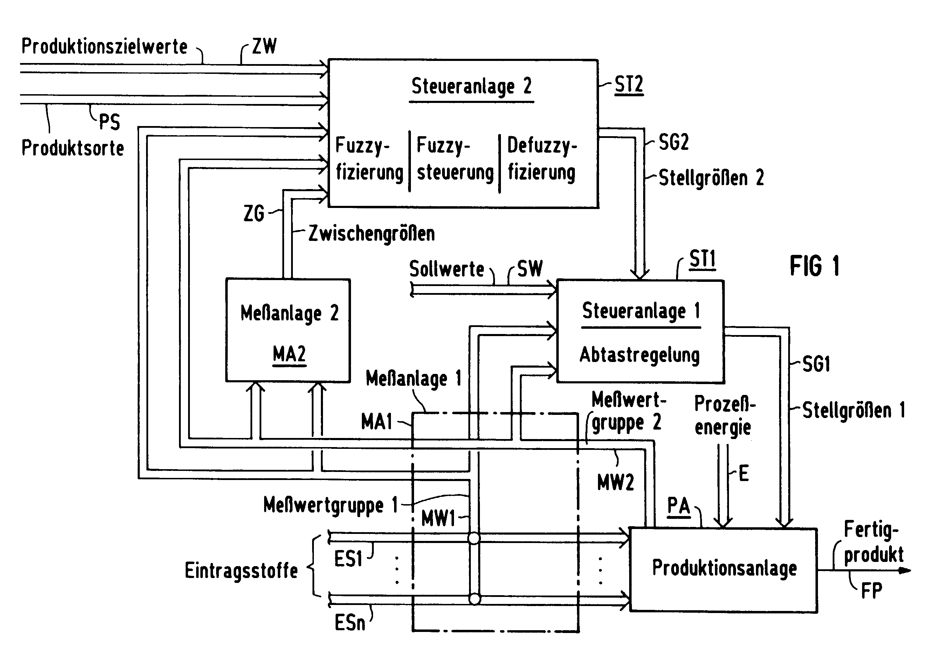

Gemäß dem Blockschaltbild von FIG 1 betrifft die Erfindung eine Vorrichtung zur automatischen Führung einer verfahrenstechnischen Anlage, insbesondere einer Produktionsanlage PA. Dieser werden am Eingang in der Regel eine Vielzahl von Eintragsstoffen ES...ESn zugeführt, welche in der Anlage unter Zuhilfenahme von zugeführter Prozeßenergie E, z.B. von Prozeßdampf und elektrischer Energie zum Betrieb von Antrieben aller Art, in ein oder mehrere Ausgangs-bzw. Fertigprodukt FP umgeformt werden.

Es ist eine erste Meßanlage MA1 vorgesehen, welche im Blockschaltbild der FIG 1 mit einer strichlierten Linie umgeben ist. Diese erfaßt in einer ersten Meßwertgruppe MW1 den Zustand der Eintragsstoffe ES1...ESn. Als Zustandsgrößen können dabei z.B. die Temperatur, der Vordruck, der Durchsatz und die aktuelle Qualität des jeweiligen Eintragsstoffes berücksichtigt werden. Die erste Meßwertanlage MA1 erfaßt ferner in einer zweiten Meßwertgruppe MW2 den Zustand der Betriebsmittel in der verfahrenstechnischen Anlage PA. Als Zustandsgrößen können auch hierbei, z.B. Temperaturen, Drücke, Drehzahlen und gegebenenfalls die aktuelle Qualität von Zwischenprodukten im Inneren der Anlage PA auftreten.

Die erfindungsgemäß Vorrichtung weist desweiteren eine erste Steueranlage ST1 auf. Diese enthält Betriebsmittel zur Steuerung und/oder Regelung der Betriebsmittel in der verfahrenstechnischen Anlage. Hierbei kann es sich z.B. um Schrittsteuerungen, Kaskadenregelungen, Abtastregelungen, adaptive Regler, Regler mit Strukturumschaltungen und dergleichen handeln. Unter Zuhilfenahme vorgegebener Sollwerte SW insbesondere für die Regelgrößen der verfahrenstechnischen Anlage und der Istwerte der in der ersten und zweiten Meßwertgruppe MW1,MW2 zusammengefaßten Größen wird ein erster Satz an Stellgrößen SG1 gebildet. Dieser dient zur Führung der Betriebsmittel in der verfahrenstechnischen Anlage PA.

Schließlich weist die erfindungsgemäße Vorrichtung gemäß dem Blockschaltbild in FIG 1 eine zweite Steueranlage ST2 auf, welche im wesentlichen eine Fuzzy-Steuerung mit einem vorgelagerten Modul zur "Fuzzy-fizierung" der Eingangsgrößen und einem nachgeschalteten Modul zur sogenannten "De-Fuzzyfizierung" der Ausgangsgrößen enthält. Die Fuzzy-Steuerung bildet unter Zuhilfenahme der ersten und zweiten Meßwertgruppe MW1,MW2 und unter Zuhilfenahme von vorgegebenen Produktions- oder Verfahrenszielwerten ZW einen zweiten Satz an Stellgrößen SG2. Gegebenenfalls können zu deren Bildung auch Produktionssortenwerte PS zusätzlich vorgegeben werden. Dieser zweite Satz an Stellgrößen SG2 dient bei der ersten Steueranlage ST1 zur Vorgabe von Begrenzungswerten und/oder Umschaltsignalen für die darin enthaltenen Betriebsmittel zur Steuerung und/oder Regelung der Betriebsmittel in der verfahrenstechnischen Anlage PA.

Der von der Fuzzy-Steuerung gebildete zweite Satz an Stellgrößen SG2 paßt somit die Begrenzungswerte der Betriebsmittel zur Steuerung und/oder Regelung in der ersten Steueranlage ST1 an Veränderungen in den jeweiligen Produktionszielwerten bzw. an Veränderungen der Größen in der ersten und zweiten Meßwertgruppe MW1,MW2 an. Dabei stellen z.B. die Produktionszielwerte in der Regel sogenannte "unscharfe" Größen dar. So kann z.B. die als Produktionszielwert dienende Größe "Ausbeute" der zweiten Steueranlage ST2 in Form von Größenstufen "weniger wichtig", "wichtig" bzw. "sehr wichtig" vorgegeben werden. In der gleichen Weise können z.B. auch aktuelle Qualitätszielwerte als "unscharfe" Eingangsgrößen vorgegeben werden. Ferner können auch einzelne Größen in der ersten und zweiten Meßwertgruppe MW1,MW2 "unscharfe" Größen darstellen. So ist in vielen Fällen die aktuelle Qualität der Eintragsstoffe ES...ESn in der Meßwertgruppe MW1 bzw. die aktuelle Qualität von Zwischenprodukten der verfahrenstechnischen Anlage PA in der Meßwertgruppe MW2 häufig nicht exakt meßtechnisch erfaßbar. Vielmehr kann die vorliegende Qualität nur grob beurteilt und z.B. den Kategorien "gut", "mittel" bzw. "schlecht" zugeordnet werden. Auch derartige unscharfe Größen werden der zweiten Steueranlage ST2 zugeführt und können mit Hilfe der dortigen, auf dem Fuzzy-Prinzip aufgebauten Steuerung sehr vorteilhaft in den zweiten Satz von Stellgrößen SG2 abgebildet werden.

Die Eingangsgrößen für die zweite Steueranlage ST2 müssen somit nicht in klassischer, exakt meßtechnisch erfaßbarer Weise vorliegen. Vielmehr ist es ausreichend, wenn diese lediglich recht groben Teilwertbereichen zugeordnet werden können, wie z.B. "klein", "mittel" und "groß". Auf diese Weise ist es gemäß der Erfindung möglich, bislang bei der Führung insbesondere von Produktionsanlagen in Ermangelung von deren exakter meßtechnischer Erfassung nicht berücksichtigte Prozeßgrößen dennoch bei der Anpassung des Prozeßführungsraumes der Anlage zu berücksichtigen.

Der durch die Fuzzy-Steuerung ermittelte zweite Satz an Stellgrößen SG2 dient zur aktuellen Vorgabe bzw. Anpassung von Begrenzungswerten für die durch die Betriebsmittel der ersten Steueranlage ST1 geführten Prozeßgrößen der Produktionsanlage. So können z.B. die Begrenzungen von Stellwerten am Ausgang übergeordneter Regler, z.B. die Begrenzungen von Sollwerten am Eingang untergeordneter Regler, und somit die Grenzen des gesamten Prozeßsteuerraumes für die Produktionsanlage vorgegeben werden. Für den Fall, daß die erste Steueranlage ST1 z.B. adaptierende Regler bzw. Regler mit Strukturumschaltmöglichkeiten enthält, können die Stellgrößen SG2 der zweiten Steueranlage ST2 auch Umschaltsingale enthalten, mit denen die Struktur der jeweiligen Regeleinrichtung in ST1 an die aktuellen Produktionszielwerte bzw. die jeweils vorliegende Beschreibung der gewünschten Produktsorte am Eingang von ST2 optimal angepaßt werden kann. Die Erfindung ermöglicht somit nicht nur eine Anpassung des Prozeßführungsraumes für die Mittel zur Steuerung und/oder Regelung in der ersten Steueranlage, sondern ermöglicht auch die Auswahl von z.B. optimalen Regelalgorithmen bzw. Steuerstrukturen zum Zwecke einer optimalen automatischen Führung der Produktionsanlage PA. Innerhalb der durch den zweiten Satz an Stellgrößen SG2 vorgegebenen Steuerraumgrenzen können die Prozeßgrößen der Produktionsanlage mit konventionellen Regel-, Steuer- und Optimierungsverfahren regelungstechnisch geführt werden. Andererseits können diese Betriebsmittel zur Steuerung und/oder Regelung der Produktionsanlage im Inneren der ersten Steueranlage ST1 auch nach den Prinzipien der Fuzzy-Steuerung aufgebaut sein.

Gemäß einer weiteren, im Blockschaltbild der FIG 1 bereits dargestellten Ausführungsform ist eine zweite Meßanlage MA2 vorhanden, welche aus der ersten und zweiten Meßwertgruppe MW1,MW2 zusätzliche Produktions- und Produktzwischengrößen extrapoliert und der zweiten Steueranlage ST2 zur Bildung des zweiten Satzes an Stellgrößen SG2 zuführt. Auch hierbei werden viele der Zwischengrößen ZG nicht exakt extrapolierbar sein. Vielmehr stehen diese Größen häufig nur als "unscharfe" Werte zur Verfügung. Aufgrund der vorteilhaften Ausführung der erfindungsgemäßen Vorrichtung können diese Zwischengrößen dennoch als Eingangsgrößen der zweiten Steueranlage ST2 zur Bildung des zweiten Satzes an Stellgrößen SG2 herangezogen werden.

Die erfindungsgemäße Vorrichtung gemäß dem Blockschaltbild von FIG 1 ist besonders vorteilhaft einsetzbar bei Produktionsanlagen mit Chargenbetrieb der Eintragsstoffe. Bei derartigen technischen "Batch-Prozessen" werden die Eintragsstoffe nicht kontinuierlich in Fertigprodukte umgewandelt. Vielmehr wird die Produktionsanlage zunächst mit Eintragsstoffen angefüllt. Diese werden nach Inbetriebsetzung der Produktionsanlage ohne Hinzunahme weiterer Eintragsstoffe in die jeweiligen Fertigprodukte übergeführt. In diesem Fall bestimmt die zweite Steueranlage ST2 den zweiten Satz an Stellgrößen SG2 für die Betriebsmittel zur Steuerung und/oder Regelung der Produktionsanlage PA in der ersten Steueranlage ST1 vor Beginn der Verarbeitung der aktuellen Charge an Eintragsstoffen ES1...ESn in der Produktionsanlage PA unter Zuhilfenahme zumindest der den Zustand der Eintragsstoffe erfassenden ersten Meßwertgruppe MW1. Ein derart ermittelter zweiter Satz an Stellgrößen SG2 bleibt dann für die Dauer der Verarbeitung der aktuellen Charge an Eintragsstoffen ES1...ESn bis zur Erzeugung des Fertigproduktes konstant.

Die Anwendung der Erfindung auf Chargenprozesse hat somit den besonderen Vorteil, daß vor Beginn der Bearbeitung einer Charge von Eintragsstoffen in der Produktionsanlage der Prozeßführungraum durch Vorgabe von Begrenzungswerten und/oder Umschaltsignalen für die Betriebsmittel zur Steuerung und/oder Regelung in der ersten Steueranlage ST1 optimal voreingestellt bzw. angepaßt werden.

Gemäß einer weiteren Ausführungsform werden zur Bestimmung des zweiten Satzes an Stellgrößen SG2 zusätzlich die zu einer vorangegangenen Charge an Eintragsstoffen ES1...ESn gehörige erste und/oder zweite Meßwertgruppe herangezogen. Hiermit kann besonders vorteilhaft vor Verarbeitung einer Charge von Eintragsstoffen der optimale Prozeßführungsraum unter Heranziehung der bei der Verarbeitung vorangegangener Chargen gewonnenen Erkenntnisse optimal eingestellt werden.

Die Erfindung ist bei unterschiedlichsten, kontinuierlich oder diskontinuierlich ablaufenden technischen Prozessen anwendbar. So kann als Produktionsanlage z.B. eine Vulkanisationsanlage zum Reifenpressen, oder eine beliebige andere verfahrentechnische Anlage dienen, bei der unterschiedliche chemische Reaktionen z.B. in diskontinuierlichen Reaktoren ablaufen. Als Produktionsanlage im weiteren Sinne ist z.B. auch ein Klärwerk denkbar, dem Schmutzwässer als Eintragsstoffe zugeführt werden und das z.B. gereinigtes Regenerationswasser und kompostierbare Feststoffe als "Fertigprodukte" abgibt.

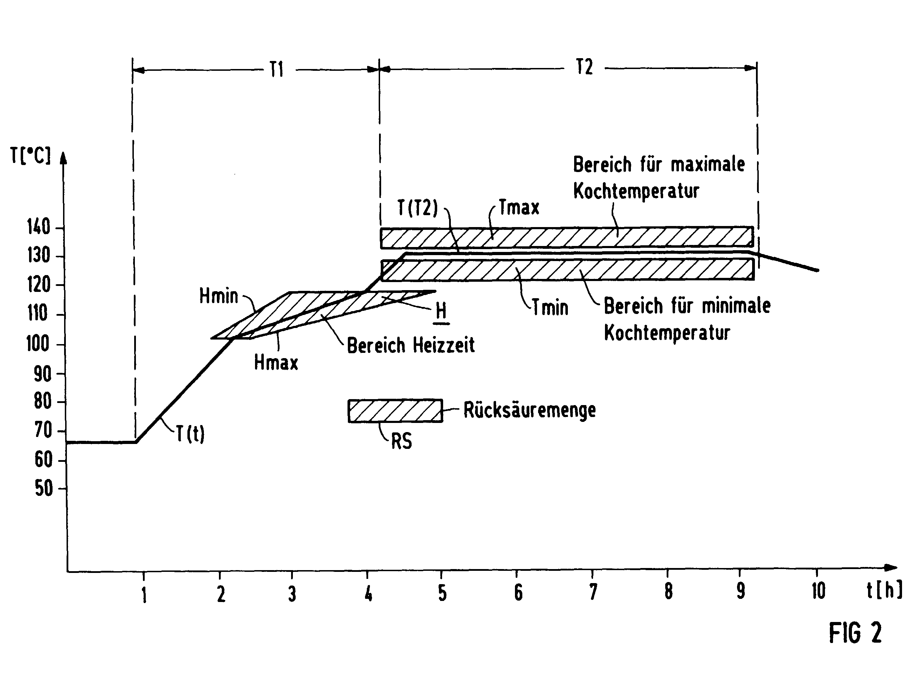

Unter Zuhilfenahme der FIG 2 wird desweiteren die Verwendung der erfindungsgemäßen Vorrichtung für eine Produktionsanlage zur Umwandlung von Holzstoff in Zellstoff beschrieben, d.h. für eine sogenannte "Zellstoffkocherei". Einer derartigen Anlage werden als Eintragsstoffe zumindest Holzstoff, Wasser und Chemikalien zum Aufschluß des Faserverbandes des Holzstoffes zugeführt. Als Fertigprodukt FP soll ein Zellstoff mit einer bestimmten Produktqualität erzeugt werden. Diese kann z.B. durch den jeweils gewünschten bzw. erreichten Grad des Holzaufschlusses bzw. der Lignin-Herauslösung aus dem Fasermaterial beschrieben werden. Eine andere Maßzahl für die erreicht bzw. erreichbare Produktqualtität des Zellstoffes ist z.B. dessen Reißfestigkeit.

Bei einer ersten Ausführungsform der erfindungsgemäßen Verwendung werden in diesem Fall von der ersten Meßanlage MA1 zumindest in der zweiten Meßwertgruppe MW2 die Verläufe der Temperatur T(t) und gegebenenfalls des Druckes während des Betriebes der Produktionsanlage, d.h. während der sogenannten "Kochung" erfaßt.

In FIG 2 ist beispielhaft ein derartiger Verlauf der Kochtemperatur T(t) dargestellt. Dabei werden prozeßtechnisch zwei Phasen der Kochung unterschieden, welche in FIG 2 mit den Zeiträumen T1 und T2 markiert sind. In der ersten Phase T1 wird die Suspension aus Holzstoff, Wasser und Aufschlußchemikalien von annähernd Umgebungstemperatur auf die sogenannte Fertigkochtemperatur aufgeheizt. Im Beispiel der FIG 2 dauert dieser Vorgang ca. 3,5 Stunden und ist mit erreichen einer Fertigkochtemperatur T(T2) = 130 ° C abgeschlossen. Mit Erreichen der Fertigkochtemperatur beginnt die zweite Phase T2 der Kochung. In dieser sogenannten "Hauptkochphase" wird die Fertigkochtemperatur T(T2) für einen längeren Zeitraum von z.B. 4-5 Stunden bis zum Ende der Kochung auf einem hohen Wert gehalten.

In diesem Fall weist die erste Steueranlage ST1 der erfindungsgemäßen Vorrichtung Betriebsmittel zur Steuerung und/oder Regelung der Temperatur und gegebenenfalls des Druckes auf, welche wiederum einen dazugehörigen ersten Satz an Stellgrößen SG1 zur Führung der entsprechenden Betriebsmittel in der Produktionsanlage PA abgeben. Die Fuzzy-Steuerung der zweiten Steueranlage ST2 bildet wiederum einen zweiten Satz an Stellgrößen SG2, womit zumindest Begrenzungswerte für die Verläufe der Temperatur und des Druckes während der Kochung für die Betriebsmittel zur Steuerung und/ oder Regelung in der ersten Steueranlage ST1 vorgegeben werden.

In FIG 2 sind dementsprechend schraffierte Bereiche für die maximale Kochtemperatur Tmax und für die minimale Kochtemperatur Tmin eingetragen. Erfindungsgemäß bestimmt nun die Fuzzy-Steuerung der zweiten Steueranlage ST2 einen im schraffierten Bereich Tmax liegenden maximalen Wert und einen im schraffierten Bereich Tmin liegenden minimalen Wert der Kochtemperatur unter Heranziehung von aktuellen Produktionszielwerten, gegebenenfalls zusätzlichen Produktsortenwerten und zumindest der Größen in der zweiten Meßwertgruppe MW2. Diese Werte müssen zu Beginn der zweiten Phase T2 der Kochung vorliegen, d.h. in FIG 2 zum Zeitpunkt von ca. 4,5 Stunden und werden für den Rest der Kochung konstant gehalten. Die vorgegebenen Größen bilden den Steuerraum für die Prozeßgröße "Temperatur". Innerhalb dieser Kochtemperaturgrenzen können die Mittel zur Steuerung und/oder Regelung in der ersten Steueranlage ST1 den Istwerte der Kochtemperatur T(T2) nach vorgegebenen Sollwerten und Regel- bzw. Optimierungsstrategien nachführen. Zur Führung können konventionelle Regelungsmittel oder wiederum nach dem Prinzip der Fuzzy-Steuerung aufgebaute Regelungsmittel im Inneren der ersten Steueranlage ST1 dienen. Im dargestellten Beispiel der Zellstoffkochung kann der Ablauf des Prozesses und somit insbesondere die am Prozeßende erreichbare Qualität des Zellstoffes durch geeignete Vorgabe der maximal und minimal zulässigen Kochtemperatur über die Fuzzy-Steuerung in der zweiten Steueranlage ST2 besonders vorteilhaft einfach und schnell an veränderte Produktionszielwerte angepaßt werden. So kann z.B. bei Bedarf die Produktionsmenge an Zellstoff in den Vordergrund gestellt werden, bzw. es können die Steuerraumgrenzen für die Regelgröße "Kochtemperatur T(t)" durch entsprechende Vorgabe "unscharfer" Produktionszielwerte über die zweite Steueranlage auch derart vorgegeben werden, daß unter Verzicht auf große Produktionsmengen Zellstoff mit einer bestimmten Qualität erzeugt wird, z.B. Reißfestigkeit.

Bei einer weiteren Ausführung kann von der ersten Meßanlage MA1 in der ersten Meßwertgruppe MW1 zusätzlich die Rücksäuremenge RS und in der zweiten Meßwertgruppe MW2 zusätzlich die Aufheizzeit H erfaßt werden. In diesem Fall verfügt die erste Steueranlage ST1 zum Zwecke der Bildung des entsprechenden ersten Satzes von Stellgrößen SG1 über die zugehörigen Betriebsmittel zur Steuerung und/oder Regelung der Rücksäuremenge und der Aufheizzeit. Auch in diesem Fall gibt die Fuzzy-Steuerung der zweiten Steueranlage ST2 unter Berücksichtigung von nur "unscharf" vorliegenden Produktionszielwerten und gegebenenfalls Produktionssortenwerten einen dazugehörigen zweiten Satz an Stellgrößen SG2 zumindest zur Vorgabe von Begrenzungswerten für die Rücksäuremenge RS und die Aufheizzeit H für die erste Steueranlage ST1 vor.

Dementsprechend sind in FIG 2 weitere schraffierte Bereiche für die Rücksäuremenge RS und für die Heizzeit H eingetragen. Die erfindungsgemäße Vorrichtung gibt für die aktuelle Charge einen im Inneren des schraffierten Bereiches RS liegenden, optimalen Sollwert für die Rücksäuremenge vor. Der Istwert der Rücksäuremenge wird schließlich mit den Betriebsmitteln der ersten Steueranlage ST1 möglichst exakt diesem Sollwert nachgeführt. In der gleichen Weise ist im Temperaturbereich zwischen ca. 100 und 120 ° C ein schraffierter Bereich für die maximal bzw. minimal zulässige Heizzeit bzw. Heizgeschwindigkeit H eingetragen. Auch hier gibt die Fuzzy-Steuerung in der zweiten Steueranlage ST2 den im Hinblick auf die jeweils vorliegenden "unscharfen" Produktionszielwerte optimalen Sollwertverlauf für die Heizzeit bzw. Heizgeschwindigkeit im Inneren des schraffierten Bereiches H vor.

Vorteilhaft können weitere "unscharfe Größen" der zweiten Steueranlage ST2 zugeführt werden, um die "Steuerbarkeit" der Produktionsanlage zur Herstellung von Zellstoff weiter zu verbessern. So können besonders vorteilhaft die Holzfeuchte ("Holzqualität") des Eintragsstoffes "Holzstoff" und der Gehalt an aktiven Chemikalien des Eintragsstoffes "Kochflüssigkeit" der Fuzzy-Steuerung in der zweiten Steueranlage zusätzlich als "unscharfe Größen" zugeführt werden. Desweiteren können vorteilhaft als "unscharfe" Produktionszielwerte ZW zusätzlich der zugelassene Verbrauch an Holzstoff und der erwartete Wert an Zellstoffausbeute zur Bestimmung der als Begrenzungswerte und/oder Umschaltsignale für die erste Steueranlage ST1 dienenden zweiten Satzes an Stellgrößen SG2 zugeführt werden.

In der gleichen Weise kann auch der Prozeßführungsraum für den Zeitverlauf des Druckes bei jeder Kochung mit Hilfe der Erfindung neu bestimmt werden. Damit werden diese Grenzen von Kochung zu Kochung beweglich und bilden bei jeder Charge einen optimierten Steuerraum für die konventionellen Regel- und Steuereinrichtungen aus.

Mit Hilfe der erfindungsgemäßen "zielwertgesteuerten" Anpassung des Prozeßführungsraumes für die durch die erste Steueranlage geführten Prozeßgrößen kann die Steuerbarkeit einer Produktionsanlage erheblich verbessert werden, da zur aktuellen Einstellung des Prozeßführungsraumes auch Größen herangezogen werden können, deren Werte nicht in meßtechnisch exakter sondern lediglich "unscharfer" Weise zur Verfügung stehen.

## Patentansprüche

1. Verfahren zur automatischen Führung einer Produktionsanlage (PA) mit Chargenbetrieb, der zur Erzeugung eines Fertigproduktes (FP) Eintragsstoffe (ES1 ... ESn) zugeführt werden, insbesondere zur Umwandlung von Holzstoff in Zellstoff, mit folgenden Verfahrensschritten:
a) in einer ersten Meßwertgruppe (MW1) wird der Zustand der Eintragsstoffe (ES1...ESn) und in einer zweiten Meßwertgruppe (MW2) wird der Zustand von Betriebgrößen, Betriebsparametern und/oder Zustandsgrößen der Produktionsanlage (PA) erfaßt,
b) aus vorgegebenen Sollwerten und der ersten und der zweiten Meßwertgruppe (MW1, M2) wird ein erster Satz an Stellgrößen (SG1) für eine erste Steueranlage (ST1) mit Einrichtungen zur Steuerung und Regelung der Betriebsgrößen, Betriebsparameter und/ oder Zustandsgröße der Produktionsanlage (PA) gebildet,
c) über eine Fuzzy-Steuerung als Teil einer zweiten Steueranlage (ST2) werden aus den Meßwertgruppen (MW1, MW2) und aus vorgegebenen Produktionszielwerten (ZW) ein zweiter Satz von Stellgrößen (SG2) gebildet, der auf die erste Steueranlage (ST1) gegeben wird und dort Begrenzungswerte und/oder Umschaltsignale für die Betriebsgrößen, Betriebsparameter und/oder Zustandsgrößen der Produktionsanlage (PA) erzeugt.

2. Verfahren nach Anspruch 1, **dadurch gekennzeichnet,** daß der zweiten Steueranlage (ST2) zur Bildung des zweiten Satzes an Stellgrößen (SG2) für die erste Steueranlage (ST1) zusätzlich Produktsortenwerte (PS) vorgegeben werden.

3. Verfahren nach Anspruch 1 oder 2, **dadurch gekennzeichnet,** daß in der zweiten Meßwertgruppe (MW2) zusätzlich der Zustand möglicher Zwischenprodukte im Inneren der Produktionsanlage (PA) erfaßt wird.

4. Verfahren nach Anspruch 1, **dadurch gekennzeichnet,** daß aus der ersten und zweiten Meßwertgruppe (MW1, MW2) Produktions- und Produktzwischengrößen (ZG) extrapoliert und der zweiten Steueranlage (ST2) zur Bildung des zweiten Satzes an Stellgrößen zugeführt werden.

5. Verfahren nach einem der Ansprüche 1 bis 4, **dadurch gekennzeichnet ,** daß zur Umwandlung von Holzstoff in Zellstoff in einer Zellstoffkocherei als Produktionsanlage (PA)
a) zumindest in der zweiten Meßwertgruppe (MW2) die Verläufe der Temperatur (T(t)) und des Druckes während einer Kochung erfaßt werden, wozu
b) die erste Steueranlage (ST1) Einrichtungen zur Steuerung und/oder Regelung der Temperatur (T(t)) und des Druckes verwendet und den dazugehörigen ersten Satz an Stellgrößen (SG1) zur Führung der entsprechenden Betriebsgrößen, Betriebsparameter und/oder Zustandsgrößen der Produktionsanlage (PA) ermittelt, und
c) die Fuzzy-Steuerung der zweiten Steueranlage (ST2) den zweiten Satz an Stellgrößen (SG2) bildet, womit zumindest die Begrenzungswerte für die Temperatur (T(t)) und den Druck während der Kochung für die Einrichtungen zur Steuerung und/oder Regelung in der ersten Steueranlage (ST1) vorgegeben werden.

6. Verfahren nach Anspruch 5, **dadurch gekennzeichnet,** daß
a) in der ersten Meßwertgruppe (MW1) die Rücksäuremenge (RS) und in der zweiten Meßwertgruppe (MW2) die Aufheizzeit (H) erfaßt werden,
b) die erste Steueranlage (ST1) zur Bildung des ersten Satzes von Stellgrößen (SG1) dazugehörige Einrichtungen zur Steuerung und/oder Regelung verwendet, und
c) die Fuzzy-Steuerung der zweiten Steueranlage (ST2) den dazugehörigen zweiten Satz an Stellgrößen (SG2) zumindest zur Vorgabe von Begrenzungswerten für die Rücksäuremenge (RS) und die Aufheizzeit (H) der ersten Steueranlage (ST1) vorgibt.

7. Verfahren nach Anspruch 5 oder 6, **dadurch gekennzeichnet,** daß der Fuzzy-Steuerung in der zweiten Steueranlage (ST2) als Produktionszielwerte (ZW) zumindest der zugelassene Verbrauch an Holzstoff und der erwartete Wert an Zellstoffausbeute zugeführt werden, und daß in der ersten Meßwertgruppe (MW1) zumindest die Holzfeuchte ("Holzqualität") des eingebrachten Holzstoffes und der Gehalt an aktiven Chemikalien in der eingebrachten Kochflüssigkeit als unscharfe Größen zur Bestimmung des als Begrenzungswerte und/oder Umschaltsginale für die erste Steueranlage (ST1) dienenden zweiten Satzes an Stellgrößen (SG2) enthalten sind.

8. Vorrichtung zur automatischen Führung einer Produktionsanlage (PA) mit Chargenbetrieb, der Eintragsstoffe (ES1... ESn) zugeführt werden, insbesondere zur Erzeugung eines Fertigproduktes (FF), mit
a) einer ersten Meßanlage (MA1), welche in einer ersten Meßwertgruppe (MW1) den Zustand der Eintragsstoffe (ES1... ESn) und in einer zweiten Meßwertgruppe (MW2) den Zustand der Betriebsgrößen, Betriebsparametern und/oder Zustandsgrößen der Produktionsanlage (PA) erfaßt,
b) einer ersten Steueranlage (ST1) mit Einrichtung zur Steuerung und/oder Regelung der Betriebsgrößen, Betriebsparametern und/oder Zustandsgrößen der Produktionsanlage (PA), welche aus der ersten und zweiten Meßwertgruppe (MW1,MW2) einen ersten Satz an Stellgrößen (SG1) zur Führung der Betriebsgrößen, Betriebsparametern und/oder Zustandsgrößen der Produktionsanlage (PA) nach vorgegebenen Sollwerten (SW) bildet, und mit
c) einer zweiten Steueranlage (ST2), welche eine Fuzzy-Steuerung aufweist, die aus der ersten und zweiten Meßwertgruppe (MW1,MW2) und aus vorgegebenen Produktionszielwerten (ZW) einen zweiten Satz an Stellgrößen (SG2) für die erste Steueranlage (ST1) bildet, wodurch dort Begrenzungswerte und/oder Umschaltsignale für die Betriebsparametern und/oder Zustandsgrößen der Produktionsanlage (PA) erzeugt werden.

9. Vorrichtung nach Anspruch 8, **dadurch gekennzeichnet,** daß zusätzlich zur ersten Meßanlage (MA1) eine zweite Meßanlage (MA2) zur Bildung von Produktions- und Produktzwischengrößen (ZG) vorhanden ist.

## Claims

1. Method for automatically controlling a production plant (PA) having batch operation, to which production plant feed materials (ES1 ... ESn) are supplied in order to produce a finished product (FP), in particular for converting wood pulp into cellulose, having the following steps:
a) the state of the feed materials (ES1...ESn) is detected in a first measured-value group (MW1), and the state of operating variables, operating parameters and/or state variables of the production plant (PA) is detected in a second measured-value group (MW2),
b) there is formed from specified setpoints and the first and second measured-value groups (MW1, MW2), a first set of manipulated variables (SG1) for a first control unit (ST1) having devices for controlling and regulating the operating variables, operating parameters and/or state variables of the production plant (PA),
c) by way of a fuzzy control as part of a second control unit (ST2), a second set of manipulated variables (SG2) is formed from the measured-value groups (MW1, MW2) and from specified production target values (ZW) and is passed to the first control unit (ST1) and there generates limiting values and/or switch-over signals for the operating variables, operating parameters and/or state variables of the production plant (PA).

2. Method according to claim 1, characterised in that product type values (PS) are additionally specified for the second control unit (ST2) in order to form the second set of manipulated variables (SG2) for the first control unit (ST1).

3. Method according to claim 1 or 2, characterised in that the state of possible intermediate products inside the production plant (PA) is additionally detected in the second measured-value group (MW2).

4. Method according to claim 1, characterised in that production variables and intermediate-product variables (ZG) are extrapolated from the first and second measured-value groups (MW1, MW2) and supplied to the second control unit (ST2) in order to form the second set of manipulated variables.

5. Method according to one of the claims 1 to 4, characterised in that in order to convert wood pulp into cellulose in a cellulose digester as a production plant (PA),
a) the courses of the temperature (T(t)) and the pressure during a digestion are detected at least in the second measured-value group (MW2), for which purpose
b) the first control unit (ST1) uses devices for controlling and/or regulating the temperature (T(t)) and the pressure and establishes the associated first set of manipulated variables (SG1) for controlling the corresponding operating variables, operating parameters and/or state variables of the production plant (PA), and
c) the fuzzy control of the second control unit (ST2) forms the second set of manipulated variables (SG2), with which at least the limiting values for the temperature (T(t)) and the pressure during the digestion are specified for the devices for controlling and/or regulating in the first control unit (ST1).

6. Method according to claim 5, characterised in that
a) the return acid amount (RS) is detected in the first measured-value group (MW1) and the heating time (H) is detected in the second measured-value group (MW2),
b) the first control unit (ST1) uses associated devices for controlling and/or regulating in order to form the first set of manipulated variables (SG1), and
c) the fuzzy control of the second control unit (ST2) specifies the associated second set of manipulated variables (SG2) at least for specifying limiting values for the return acid amount (RS) and the heating time (H) of the first control unit (ST1).

7. Method according to claim 5 or 6,
characterised in that there are supplied to the fuzzy control in the second control unit (ST2) as production target values (ZW) at least the permitted consumption of wood pulp and the expected value of cellulose yield, and in that at least the wood dampness ("wood quality") of the wood pulp which is put in and the content of active chemicals in the digestion liquid which is put in are contained in the first measured-value group (MW1) as fuzzy variables for determining the second set of manipulated variables (SG2), which is used as limiting values and/or switch-over signals for the first control unit (ST1).

8. Device for automatically controlling a production plant (PA) having batch operation, to which production plant feed materials (ES1...ESn) are supplied, in particular for producing a finished product (FF (sic)), having
a) a first measuring unit (MA1), which detects the state of the feed materials (ES1...ESn) in a first measured-value group (MW1) and detects the state of the operating variables, operating parameters and/or state variables of the production plant (PA) in a second measured-value group (MW2),
b) a first control unit (ST1) having devices for controlling and/or regulating the operating variables, operating parameters and/or state variables of the production plant (PA), which first control unit forms from the first and second measured-value groups (MW1, MW2) a first set of manipulated variables (SG1) for controlling the operating variables, operating parameters and/or state variables of the production plant (PA) according to specified setpoints (SW), and having
c) a second control unit (ST2) which has a fuzzy control, which forms from the first and second measured-value groups (MW1, MW2) and from specified production target values (ZW) a second set of manipulated variables (SG2) for the first control unit (ST1), as a result of which limiting values and/or switch-over signals are formed there for the operating parameters and/or state variables of the production plant (PA).

9. Device according to claim 8, characterised in that in addition to the first measuring unit (MA1), there is a second measuring unit (MA2) for forming production variables and intermediate-product variables (ZG).

## Revendications

1. Procédé de guidage automatique d'une installation (PA) de production comportant un service d'enfournement, auquel, pour produire un produit (FP) fini, on envoie des matières (ES1 ... ESn) à enfourner, notamment en vue de transformer de la pâte mécanique en pâte de cellulose, comportant les étapes opératoires suivantes:
a) on détermine dans un premier groupe (MW1) de valeurs de mesure l'état des matières (ES1 ... ESn) à enfourner et, dans un deuxième groupe (MW2) de valeurs de mesure, l'état de grandeurs de fonctionnement, de paramètres de fonctionnement et/ou de grandeurs d'état de l'installation (PA) de production,
b) à partir de valeurs de consigne prescrites et du premier groupe (MW1) de valeurs de mesure et du deuxième groupe (MW2) de valeurs de mesure, on forme un premier ensemble de grandeurs (SG1) réglantes destiné à une première installation (ST1) de commande comportant des dispositifs pour commander et régler les grandeurs de fonctionnement, les paramètres de fonctionnement et/ou les grandeurs d'état de l'installation (PA) de production,
c) par l'intermédiaire d'une commande par logique floue faisant partie d'une deuxième installation (ST2) de commande, on forme, à partir des groupes (MW1,MW2) de valeurs de mesure et à partir de valeurs (ZW) cibles de production prescrites, un deuxième ensemble de grandeurs (SG2) réglantes, qui est fourni à la première installation (ST1) de commande et qui y produit des valeurs de limitation et/ou des signaux de commutation pour les grandeurs de fonctionnement, les paramètres de fonctionnement et/ou les grandeurs d'état de l'installation (PA) de production.

2. Procédé suivant la revendication 1, caractérisé en ce que l'on prescrit en plus des valeurs (PS) de genre de produits à la deuxième installation (ST2) de commande servant à former le deuxième ensemble de grandeurs (SG2) réglantes destiné à la première installation (ST1) de commande.

3. Procédé suivant la revendication 1 ou 2, caractérisé en ce que, dans le deuxième groupe (MW2) de valeurs de mesure, on détermine en plus l'état de produits intermédiaires possibles à l'intérieur de l'installation (PA) de production.

4. Procédé suivant la revendication 1, caractérisé en ce que, à partir du premier groupe (MW1) de valeurs de mesure et du deuxième groupe (MW2) de valeurs de mesure, on extrapole des grandeurs (ZG) intermédiaires de production et de produits et on les envoie à la deuxième installation (ST2) de commande pour former le deuxième ensemble de grandeurs réglantes.

5. Procédé suivant l'une des revendications 1 à 4, caractérisé en ce que, pour transformer que la pâte mécanique en pâte de cellulose dans une installation de lessivage de cellulose servant d'installation (PA) de production,
a) on détermine, au moins dans le deuxième groupe (MW2) de valeurs de mesure, les variations (T(t)) de la température et de la pression pendant une cuisson, à cet effet
b) la première installation (ST1) de commande utilise des dispositifs de commande et/ou de régulation de la température (T(t)) et de la pression et détermine le premier ensemble associé de grandeurs (SG1) réglantes servant à guider les grandeurs de fonctionnement, les paramètres de fonctionnement et/ou les grandeurs d'état correspondants de l'installation (PA) de production, et
c) la commande par logique floue de la deuxième installation (ST2) de commande forme le deuxième ensemble de grandeurs (SG2) réglantes, au moins les valeurs de limitation de la température (T(t)) et de la pression pendant la cuisson en étant prescrites pour les dispositifs de commande et/ou de régulation de la première installation (ST1) de commande.

6. Procédé suivant la revendication 5, caractérisé en ce que
a) dans le premier groupe (MW1) de valeurs de mesure, on détermine la quantité (RS) d'acide usée et, dans le deuxième groupe (MW2) de mesure, la durée (H) de chauffage,
b) la première installation (ST1) de commande servant à former le premier ensemble de grandeurs (SG1) réglantes utilise des dispositifs de commande et/ou de régulation associés et
c) la commande par logique floue de la deuxième installation (ST2) de commande prescrit le deuxième ensemble associé de grandeurs (SG2) réglantes, au moins en vue de prescrire des valeurs de limitation de la quantité (RS) d'acide usée et de la durée (H) de chauffage de la première installation (ST1) de commande.

7. Procédé suivant la revendication 5 ou 6, caractérisé en ce que l'on envoie à la commande par logique floue de la deuxième installation (ST2) de commande, comme valeur (ZW) cibles de production, au moins la consommation admise de pâte mécanique et la valeur de rendement en cellulose à laquelle on s'attend, et en ce qu'il est contenu dans le premier groupe (MW1) de valeurs de mesure au moins l'humidité du bois ("la qualité du bois") de la pâte mécanique introduite et la teneur en produits chimiques actifs dans la lessive de cuisson introduite comme grandeurs floues servant à déterminer le deuxième ensemble de grandeurs (SG2) réglantes servant de valeurs de limitation et/ou de signaux de commutation à la première installation (ST1) de commande.

8. Dispositif de guidage automatique d'une installation (PA) de production comportant un service d'enfournement, auquel on envoie des matières (ES1 ... ESn) à enfourner, notamment en vue de produire un produit (FF) fini, et comportant
a) une première installation (MA1) de mesure, qui détermine dans un premier groupe (MW1) de valeurs de mesure l'état des matières (ES1 ... ESn) à enfourner et, dans un deuxième groupe (MW2) de valeurs de mesure, l'état des grandeurs de fonctionnement, des paramètres de fonctionnement et/ou des grandeurs d'état de l'installation (PA) de production,
b) une première installation (ST1) de commande qui comporte un dispositif de commande et/ou de régulation des grandeurs de fonctionnement, des paramètres de fonctionnement et/ou des grandeurs d'état de l'installation (PA) de production, et qui forme, suivant des valeurs (SW) de consigne prescrites, à partir du premier groupe (MW1) de valeurs de mesure et du deuxième groupe (MW2) de valeurs de mesure, un premier ensemble de grandeurs (SG1) réglantes pour guider les grandeurs de fonctionnement, les paramètres de fonctionnement et/ou les grandeurs d'état de l'installation (PA) de production, et comportant
c) une deuxième installation (ST2) de commande, qui comporte une commande par logique floue qui, à partir du premier groupe (MW1) de valeurs de mesure et du deuxième groupe (MW2) de valeurs de mesure et à partir de valeurs (ZW) cibles de production prescrites, forme un deuxième ensemble de grandeurs (SG2) réglantes destiné à la première installation (ST1) de commande, ce qui y produit des valeurs de limitation et/ou des signaux de commutation pour les paramètres de fonctionnement et/ou les grandeurs d'états de l'installation (PA) de production.

9. Dispositif suivant la revendication 8, caractérisé en ce que, en plus de la première installation (MA1) de mesure, il est présent une deuxième installation (MA2) de mesure servant à former des grandeurs (ZG) intermédiaires de production et de produits.
